# EUROPEAN PATENT APPLICATION

(11) **EP 4 572 056 A1**
(43) Date of publication of application: **18.06.2025**
(21) Application number: 24214583.7
(22) Date of filing: 21.11.2024
(51) Int. Cl.: H02J 1/10, H02J 3/32, H02J 7/34

(54) **POWER CONVERSION DEVICE, ENERGY STORAGE SYSTEM, AND CONTROL METHOD THEREFOR**

(30) Priority: 14.12.2023 CN 202311719943
(71) Applicant: Huawei Digital Power Technologies Co., Ltd., Shenzhen, Guangdong 518043 (CN)
(72) Inventor: ZHAN, Jinxiang, Shenzhen, Guangdong 518043 (CN); TANG, Yunyu, Shenzhen, Guangdong 518043 (CN); CAO, Zhen, Shenzhen, Guangdong 518043 (CN); SHI, Lei, Shenzhen, Guangdong 518043 (CN); GAO, Yongbing, Shenzhen, Guangdong 518043 (CN)
(74) Representative: Maiwald GmbH

(57) **Abstract**

This application provides a power conversion device, an energy storage system, and a control method therefor. The power conversion device provided in this application includes a direct current DC/DC conversion circuit and a DC/alternating current AC conversion circuit, a first end of the DC/DC conversion circuit is configured to connect to an energy storage unit, a second end of the DC/DC conversion circuit is connected to a first end of the DC/AC conversion circuit, the first end of the DC/AC conversion circuit includes a positive bus, a negative bus, and a neutral line, and a second end of the DC/AC conversion circuit is configured to connect to an alternating current power grid and/or a load. An input voltage of the DC/DC conversion circuit is a voltage between the positive bus and a positive end of the energy storage unit, or a voltage between a positive end of the energy storage unit and the neutral line, or a voltage between the neutral line and a negative end of the energy storage unit, or a voltage between a negative end of the energy storage unit and the negative bus. An output voltage of the DC/DC conversion circuit is half of a direct current bus voltage. According to this application, a power transmission loss can be reduced.

## Description

### TECHNICAL FIELD

This application relates to the field of power electronics technologies, and in particular, to a power conversion device, an energy storage system, and a control method therefor.

### BACKGROUND

In an energy storage system, different battery racks have different battery compositions and use conditions, that is, different battery racks have different states of charge (SOC). To ensure that running statuses and performance of the battery racks can be coordinated, and improve a running capability of the energy storage system, a direct current (DC)/direct current converter is usually disposed in a power transmission branch of each battery rack, and SOCs of different battery racks are balanced through the DC/DC converter. In this way, a problem of a parallel mismatch between different battery racks can be resolved.

However, because the DC/DC converter is disposed in the power transmission branch of the battery rack, and needs to transmit all power for energy exchange, an efficiency loss and a severe heat dissipation problem are caused.

### SUMMARY

This application provides a power conversion device, an energy storage system, and a control method therefor, to improve operating efficiency in some scenarios.

According to a first aspect, this application provides a power conversion device. The power conversion device includes a direct current DC/DC conversion circuit and a DC/alternating current (AC) conversion circuit, a first end of the DC/DC conversion circuit is configured to connect to an energy storage unit, a second end of the DC/DC conversion circuit is connected to a first end of the DC/AC conversion circuit, the first end of the DC/AC conversion circuit includes a positive bus, a negative bus, and a neutral line, and a second end of the DC/AC conversion circuit is configured to connect to an alternating current power grid and/or a load. An input voltage of the DC/DC conversion circuit is a voltage between the positive bus and a positive end of the energy storage unit, or a voltage between a positive end of the energy storage unit and the neutral line, or a voltage between the neutral line and a negative end of the energy storage unit, or a voltage between a negative end of the energy storage unit and the negative bus. An output voltage of the DC/DC conversion circuit is half of a direct current bus voltage.

Discharging the energy storage unit is used as an example. The input voltage and the output voltage of the DC/DC conversion circuit do not completely withstand a design of an output voltage of the energy storage unit and a bus voltage, so that the DC/DC conversion circuit can not only boost or buck a voltage from the energy storage unit to a direct current bus, but also reduce a power loss in a normal operating process. The DC/DC conversion circuit may be a bidirectional DC/DC conversion circuit. This design can also achieve same effect when the energy storage unit is charged.

With reference to the first aspect, in some implementations of the first aspect, the DC/DC conversion circuit includes a first DC/DC conversion circuit, a negative end of a first end of the first DC/DC conversion circuit is configured to connect to the positive end of the energy storage unit, a positive end of the first end of the first DC/DC conversion circuit and a positive end of a second end of the first DC/DC conversion circuit are connected to the positive bus, and a negative end of the second end of the first DC/DC conversion circuit is connected to the neutral line. Alternatively, a positive end of a first end of the first DC/DC conversion circuit is configured to connect to the positive end of the energy storage unit, a positive end of a second end of the first DC/DC conversion circuit is connected to the positive bus of the DC/AC conversion circuit, and a negative end of the first end of the first DC/DC conversion circuit and a negative end of the second end of the first DC/DC conversion circuit are connected to the neutral line. Alternatively, the DC/DC conversion circuit includes a second DC/DC conversion circuit, a negative end of a first end of the second DC/DC conversion circuit is configured to connect to the negative end of the energy storage unit, a negative end of a second end of the second DC/DC conversion circuit is connected to the negative bus, and a positive end of the first end of the second DC/DC conversion circuit and a positive end of the second end of the second DC/DC conversion circuit are connected to the neutral line. Alternatively, a positive end of a first end of the second DC/DC conversion circuit is configured to connect to the negative end of the energy storage unit, a positive end of a second end of the second DC/DC conversion circuit is connected to the neutral line of the DC/AC conversion circuit, and a negative end of the first end of the second DC/DC conversion circuit and a negative end of the second end of the second DC/DC conversion circuit are connected to the negative bus.

It should be understood that the power conversion device provided in this embodiment of this application may be applied to an energy storage system. In an architecture of an existing energy storage system, a corresponding DC/DC converter is disposed in a power transmission branch of each energy storage unit to resolve a voltage mismatch problem. The energy storage unit is connected to an input end of the DC/DC converter, and an output end of the DC/DC converter is connected to a positive direct current bus and a negative direct current bus. As a result, the DC/DC converter needs to transmit all power, and operating efficiency of the energy storage system is reduced.

In the power conversion device provided in this embodiment of this application, one end of the DC/DC conversion circuit is connected between one end of the energy storage unit and a positive half bus or a negative half bus of the DC/AC conversion circuit, and the negative bus is connected to another end of the energy storage unit. In other words, the DC/DC conversion circuit in this application needs to withstand a voltage of only the positive bus or the negative bus, that is, needs only to compensate for a voltage difference between a bus voltage (that is, a voltage between the positive bus and the negative bus) and an input end voltage of the DC/DC conversion circuit. In addition, only a part of power needs to be transmitted. Therefore, an input side voltage of the DC/DC conversion circuit is relatively low, that is, transmission power of the DC/DC conversion circuit is relatively low, and transmission power of the power conversion device is reduced. In this way, a switching transistor with a relatively low withstand voltage may be selected, and an energy loss in the DC/DC conversion circuit can be reduced, thereby avoiding problems of a large loss and low efficiency of a full-power DC/DC converter, improving operating efficiency of the energy storage system, and reducing heat dissipation.

With reference to the first aspect, in some implementations of the first aspect, the power conversion device provided in this application includes a plurality of DC/DC conversion circuits, and the plurality of DC/DC conversion circuits include at least one first DC/DC conversion circuit and at least one second DC/DC conversion circuit.

In the power conversion device provided in this embodiment of this application, both the first DC/DC conversion circuit connected to the DC/AC conversion circuit through the positive half bus and the second DC/DC conversion circuit connected to the DC/AC conversion circuit through the negative half bus are disposed in the power conversion device, so that a voltage difference between the positive bus and the negative bus can be balanced. In this way, bus voltage equalization can be reduced or even avoided to some extent, thereby improving efficiency of the energy storage system.

With reference to the first aspect, in some implementations of the first aspect, the at least one first DC/DC conversion circuit and the at least one second DC/DC conversion circuit are configured to jointly control a voltage from the positive bus to the negative bus to meet a target input voltage of the DC/AC conversion circuit, and reduce a difference between a voltage from the positive bus to the neutral line and a voltage from the neutral line to the negative bus.

With reference to the first aspect, in some implementations of the first aspect, the power conversion device provided in this application includes a first switch, and the first switch is connected in parallel between the positive end of the first end of the first DC/DC conversion circuit and the positive end of the second end of the first DC/DC conversion circuit. Alternatively, the first switch is connected in parallel between the negative end of the first end of the first DC/DC conversion circuit and the positive end of the second end of the first DC/DC conversion circuit. Alternatively, the first switch is connected in parallel between the negative end of the first end of the second DC/DC conversion circuit and the negative end of the second end of the second DC/DC conversion circuit. Alternatively, the first switch is connected in parallel between the positive end of the first end of the second DC/DC conversion circuit and the negative end of the second end of the second DC/DC conversion circuit. When a voltage between the positive end and the negative end of the energy storage unit is greater than or equal to a first voltage threshold, the first switch is turned on, and the first DC/DC conversion circuit does not operate. When a voltage between the positive end and the negative end of the energy storage unit is less than the first voltage threshold, the first switch is turned off, and the first DC/DC conversion circuit operates, so that a voltage from the positive bus to the negative bus meets a target input voltage of the DC/AC conversion circuit.

In the power conversion device provided in this embodiment of this application, a switch is connected in parallel between an end that is of the energy storage unit and that is connected to the DC/DC conversion circuit and an end that is of the DC/DC conversion circuit and that is connected to the DC/AC conversion circuit, so that when the voltage between the positive end and the negative end of the energy storage unit is greater than or equal to a specific threshold, the switch is turned on, to avoid an energy loss caused by operation of the DC/DC conversion circuit, thereby improving efficiency of the power conversion device.

With reference to the first aspect, in some implementations of the first aspect, the power conversion device provided in this application includes a second switch, and the second switch is configured to be connected in series between the positive end of the energy storage unit and the first end of the first DC/DC conversion circuit. Alternatively, the second switch is configured to be connected in series between the negative end of the energy storage unit and the negative bus. Alternatively, the second switch is configured to be connected in series between the negative end of the energy storage unit and the first end of the second DC/DC conversion circuit. Alternatively, the second switch is configured to be connected in series between the positive end of the energy storage unit and the positive bus. When the voltage between the positive end and the negative end of the energy storage unit is less than or equal to a second voltage threshold, the second switch is turned off.

In the power conversion device provided in this embodiment of this application, a switch is connected in series to the positive end or the negative end of the energy storage unit, so that when the voltage between the positive end and the negative end of the energy storage unit is less than or equal to a specific threshold, in other words, when the energy storage unit is short-circuited, the DC/DC conversion circuit is protected.

With reference to the first aspect, in some implementations of the first aspect, the power conversion device provided in this application includes a soft-start circuit, the soft-start circuit includes a first branch and a second branch, and the first branch is configured to be connected in series between the positive end of the energy storage unit and the first end of the first DC/DC conversion circuit, or the first branch is configured to be connected in series between the negative end of the energy storage unit and the negative bus, or the first branch is configured to be connected in series between the negative end of the energy storage unit and the first end of the second DC/DC conversion circuit, or the first branch is configured to be connected in series between the positive end of the energy storage unit and the positive bus. The second branch is connected in parallel to two ends of the first branch, and the second branch is connected in series to a first resistor. When the power conversion device is started up and starts to receive electric energy provided by the energy storage unit, the first branch is disconnected, and the second branch is connected. After the power conversion device receives the electric energy provided by the energy storage unit, when a voltage between the two ends of the first branch is less than a third voltage threshold, the first branch is connected.

In the power conversion device provided in this embodiment of this application, two different branches, namely, the soft-start circuit, are disposed on a circuit connected to the positive end or the negative end of the energy storage unit, so that when the power conversion device is started up and starts to receive the electric energy provided by the energy storage unit, a branch connected in series to a resistor can be connected, so that devices on two sides of the soft-start circuit do not generate an excessively large current impact. In this way, safety of the system can be improved through soft-start. In addition, after the power conversion device receives the electric energy provided by the energy storage unit, when a voltage between two ends of the branch is less than a specific threshold, a branch that is not connected in series to a resistor is connected, so that operating efficiency of the energy storage system can be improved.

With reference to the first aspect, in some implementations of the first aspect, the power conversion device includes a balanced circuit, the balanced circuit is configured to operate when an absolute value of a voltage difference between the positive bus and the negative bus is greater than or equal to a fourth voltage threshold, to reduce the difference between the voltage from the positive bus to the neutral line and the voltage from the neutral line to the negative bus, and the balanced circuit does not operate when the absolute value of the voltage difference between the positive bus and the negative bus is less than the fourth voltage threshold.

In the power conversion device provided in this embodiment of this application, the voltage difference between the positive bus and the negative bus and the neutral line is balanced by using the balanced circuit, so that stability of the power conversion device can be improved.

In some embodiments, the balanced circuit includes a first end, a second end, and a third end. The first end of the balanced circuit is connected to the positive bus, the second end of the balanced circuit is connected to the negative bus, and the third end of the balanced circuit is connected to the neutral line.

With reference to the first aspect, in some implementations of the first aspect, the DC/AC conversion circuit is a two-level conversion circuit, a three-level conversion circuit, or a multi-level conversion circuit.

Optionally, the first DC/DC conversion circuit or the second DC/DC conversion circuit is a boost conversion circuit, a buck conversion circuit, or a buck-boost conversion circuit.

Optionally, the first DC/DC conversion circuit or the second DC/DC conversion circuit is an isolated conversion circuit or a non-isolated conversion circuit.

Optionally, the first DC/DC conversion circuit, the second DC/DC conversion circuit, the balanced circuit, and the DC/AC conversion circuit are bidirectional conversion circuits, configured to charge or discharge the energy storage unit.

According to a second aspect, this application provides an energy storage system. The energy storage system includes an energy storage unit, a DC/DC conversion circuit, and a DC/AC conversion circuit. A first end of the DC/DC conversion circuit is connected to the energy storage unit, a second end of the DC/DC conversion circuit is connected to a first end of the DC/AC conversion circuit, the first end of the DC/AC conversion circuit includes a positive bus, a negative bus, and a neutral line, and a second end of the DC/AC conversion circuit is configured to connect to an alternating current power grid and/or a load. An input voltage of the DC/DC conversion circuit is a voltage between the positive bus and a positive end of the energy storage unit, or a voltage between a positive end of the energy storage unit and the neutral line, or a voltage between the neutral line and a negative end of the energy storage unit, or a voltage between a negative end of the energy storage unit and the negative bus. An output voltage of the DC/DC conversion circuit is half of a direct current bus voltage.

With reference to the second aspect, in some implementations of the second aspect, the DC/DC conversion circuit includes a first DC/DC conversion circuit, a negative end of a first end of the first DC/DC conversion circuit is connected to the positive end of the energy storage unit, a positive end of the first end of the first DC/DC conversion circuit and a positive end of a second end of the first DC/DC conversion circuit are connected to the positive bus, and a negative end of the second end of the first DC/DC conversion circuit is connected to the neutral line. Alternatively, a positive end of a first end of the first DC/DC conversion circuit is connected to the positive end of the energy storage unit, a positive end of a second end of the first DC/DC conversion circuit is connected to the positive bus of the DC/AC conversion circuit, and a negative end of the first end of the first DC/DC conversion circuit and a negative end of the second end of the first DC/DC conversion circuit are connected to the neutral line. Alternatively, the DC/DC conversion circuit includes a second DC/DC conversion circuit, a negative end of a first end of the second DC/DC conversion circuit is connected to the negative end of the energy storage unit, a negative end of a second end of the second DC/DC conversion circuit is connected to the negative bus, and a positive end of the first end of the second DC/DC conversion circuit and a positive end of the second end of the second DC/DC conversion circuit are connected to the neutral line. Alternatively, a positive end of a first end of the second DC/DC conversion circuit is connected to the negative end of the energy storage unit, a positive end of a second end of the second DC/DC conversion circuit is connected to the neutral line of the DC/AC conversion circuit, and a negative end of the first end of the second DC/DC conversion circuit and a negative end of the second end of the second DC/DC conversion circuit are connected to the negative bus.

With reference to the second aspect, in some implementations of the second aspect, the energy storage system includes a plurality of DC/DC conversion circuits, and the plurality of DC/DC conversion circuits include at least one first DC/DC conversion circuit and at least one second DC/DC conversion circuit.

With reference to the second aspect, in some implementations of the second aspect, the at least one first DC/DC conversion circuit and the at least one second DC/DC conversion circuit are configured to jointly control a voltage from the positive bus to the negative bus to meet a target input voltage of the DC/AC conversion circuit, and reduce a difference between a voltage from the positive bus to the neutral line and a voltage from the neutral line to the negative bus.

With reference to the second aspect, in some implementations of the second aspect, the energy storage system includes a first switch, and the first switch is connected in parallel between the positive end of the first end of the first DC/DC conversion circuit and the positive end of the second end of the first DC/DC conversion circuit. Alternatively, the first switch is connected in parallel between the negative end of the first end of the first DC/DC conversion circuit and the positive end of the second end of the first DC/DC conversion circuit. Alternatively, the first switch is connected in parallel between the negative end of the first end of the second DC/DC conversion circuit and the negative end of the second end of the second DC/DC conversion circuit. Alternatively, the first switch is connected in parallel between the positive end of the first end of the second DC/DC conversion circuit and the negative end of the second end of the second DC/DC conversion circuit. When a voltage between the positive end and the negative end of the energy storage unit is greater than or equal to a first voltage threshold, the first switch is turned on, and the first DC/DC conversion circuit does not operate. When a voltage between the positive end and the negative end of the energy storage unit is less than the first voltage threshold, the first switch is turned off, and the first DC/DC conversion circuit operates, so that a voltage from the positive bus to the negative bus meets a target input voltage of the DC/AC conversion circuit.

With reference to the second aspect, in some implementations of the second aspect, the energy storage system includes a second switch, and the second switch is connected in series between the positive end of the energy storage unit and the first end of the first DC/DC conversion circuit. Alternatively, the second switch is connected in series between the negative end of the energy storage unit and the negative bus. Alternatively, the second switch is connected in series between the negative end of the energy storage unit and the first end of the second DC/DC conversion circuit. Alternatively, the second switch is connected in series between the positive end of the energy storage unit and the positive bus. When the voltage between the positive end and the negative end of the energy storage unit is less than or equal to a second voltage threshold, the second switch is turned off.

With reference to the second aspect, in some implementations of the second aspect, the energy storage system includes a soft-start circuit, the soft-start circuit includes a first branch and a second branch, and the first branch is connected in series between the positive end of the energy storage unit and the first end of the first DC/DC conversion circuit, or the first branch is connected in series between the negative end of the energy storage unit and the negative bus, or the first branch is connected in series between the negative end of the energy storage unit and the first end of the second DC/DC conversion circuit, or the first branch is connected in series between the positive end of the energy storage unit and the positive bus. The second branch is connected in parallel to two ends of the first branch, and the second branch is connected in series to a first resistor. When the energy storage system is started up and the energy storage unit starts to provide electric energy, the first branch is disconnected, and the second branch is connected. After the energy storage unit provides the electric energy, when a voltage between the two ends of the first branch is less than a third voltage threshold, the first branch is connected.

With reference to the second aspect, in some implementations of the second aspect, the energy storage system includes a balanced circuit, the balanced circuit is configured to operate when an absolute value of a voltage difference between the positive bus and the negative bus is greater than or equal to a fourth voltage threshold, to reduce the difference between the voltage from the positive bus to the neutral line and the voltage from the neutral line to the negative bus, and the balanced circuit does not operate when the absolute value of the voltage difference between the positive bus and the negative bus is less than the fourth voltage threshold.

With reference to the second aspect, in some implementations of the second aspect, the DC/AC conversion circuit is a two-level conversion circuit, a three-level conversion circuit, or a multi-level conversion circuit.

Optionally, the first DC/DC conversion circuit, the second DC/DC conversion circuit, the balanced circuit, and the DC/AC conversion circuit are bidirectional conversion circuits, configured to charge or discharge the energy storage unit.

According to a third aspect, this application provides a control method for an energy storage system. The control method provided in this application may be performed by a controller. The energy storage system includes an energy storage unit, a direct current DC/DC conversion circuit, a DC/alternating current AC conversion circuit, and a balanced circuit. A first end of the DC/AC conversion circuit includes a positive bus, a negative bus, and a neutral line, and a second end of the DC/AC conversion circuit is configured to connect to an alternating current power grid and/or a load. The DC/DC conversion circuit includes a first DC/DC conversion circuit, a negative end of a first end of the first DC/DC conversion circuit is connected to the positive end of the energy storage unit, a positive end of the first end of the first DC/DC conversion circuit and a positive end of a second end of the first DC/DC conversion circuit are connected to the positive bus, and a negative end of the second end of the first DC/DC conversion circuit is connected to the neutral line. Alternatively, a positive end of a first end of the first DC/DC conversion circuit is connected to the positive end of the energy storage unit, a positive end of a second end of the first DC/DC conversion circuit is connected to the positive bus of the DC/AC conversion circuit, and a negative end of the first end of the first DC/DC conversion circuit and a negative end of the second end of the first DC/DC conversion circuit are connected to the neutral line. Alternatively, the DC/DC conversion circuit includes a second DC/DC conversion circuit, a negative end of a first end of the second DC/DC conversion circuit is connected to the negative end of the energy storage unit, a negative end of a second end of the second DC/DC conversion circuit is connected to the negative bus, and a positive end of the first end of the second DC/DC conversion circuit and a positive end of the second end of the second DC/DC conversion circuit are connected to the neutral line. Alternatively, a positive end of a first end of the second DC/DC conversion circuit is connected to the negative end of the energy storage unit, a positive end of a second end of the second DC/DC conversion circuit is connected to the neutral line of the DC/AC conversion circuit, and a negative end of the first end of the second DC/DC conversion circuit and a negative end of the second end of the second DC/DC conversion circuit are connected to the negative bus. The control method provided in this application includes: obtaining voltages of the positive bus and the negative bus. When an absolute value of a voltage difference between the positive bus and the negative bus is greater than or equal to a fourth voltage threshold, the balanced circuit is controlled to operate, to reduce a difference between a voltage from the positive bus to the neutral line and a voltage from the neutral line to the negative bus, so as to maintain voltage balance between the positive bus and the negative bus. When the absolute value of the voltage difference between the positive bus and the negative bus is less than the fourth voltage threshold, the balanced circuit is controlled not to operate.

It should be understood that the control method provided in this application may be applied to the power conversion device in the first aspect or any one of the possible implementations of the first aspect, or the energy storage system in the second aspect or any one of the possible implementations of the second aspect.

With reference to the third aspect, in some implementations of the third aspect, the energy storage system includes a first switch. The method provided in this application includes: obtaining a voltage between the positive end and the negative end of the energy storage unit. When the voltage between the positive end and the negative end of the energy storage unit is greater than or equal to a first voltage threshold, the first switch is controlled to be turned on, and the DC/DC conversion circuit is controlled not to operate. When the voltage between the positive end and the negative end of the energy storage unit is less than the first voltage threshold, control the first switch to be turned off, and control the DC/DC conversion circuit to operate, so that a voltage from the positive bus to the negative bus meets a target input voltage of the DC/AC conversion circuit, to compensate for a voltage difference between the voltage of the energy storage unit and a bus voltage, where the bus voltage is a voltage between the positive bus and the negative bus.

With reference to the third aspect, in some implementations of the third aspect, the energy storage system includes a second switch. The method provided in this application includes: obtaining a voltage between the positive end and the negative end of the energy storage unit. When the voltage between the positive end and the negative end of the energy storage unit is less than or equal to a second voltage threshold, the second switch is controlled to be turned off, to protect the DC/DC conversion circuit from overstress.

With reference to the third aspect, in some implementations of the third aspect, the energy storage system includes a soft-start circuit, and the soft-start circuit includes a first branch and a second branch. The method provided in this application includes: when the energy storage system is started up and the energy storage unit starts to provide electric energy, controlling the first branch to be disconnected, and controlling the second branch to be connected. A voltage between two ends of the first branch is obtained, and when the voltage between the two ends of the first branch is less than a third voltage threshold, the first branch is controlled to be connected.

For technical effects that can be achieved in the second aspect and the third aspect, refer to descriptions of the technical effects in the first aspect. Details are not described herein again.

### BRIEF DESCRIPTION OF DRAWINGS

FIG. 1 is a diagram of an architecture of a conventional energy storage system;
FIG. 2 is a diagram of an architecture of another conventional energy storage system;
FIG. 3 is a diagram of an energy storage system 300 according to an embodiment of this application;
FIG. 4 is a topological diagram of a three-phase three-level DC/AC conversion circuit according to this application;
FIG. 5 is a diagram of a DC/DC conversion circuit according to an embodiment of this application;
FIG. 6 is a diagram of another DC/DC conversion circuit according to an embodiment of this application;
FIG. 7 is a diagram of a balanced circuit 350 according to an embodiment of this application;
FIG. 8 is a diagram of an energy storage system 800 according to an embodiment of this application;
FIG. 9 is a diagram of an energy storage system 900 according to an embodiment of this application;
FIG. 10 is a diagram of an energy storage system 1000 according to an embodiment of this application;
FIG. 11 is a diagram of an energy storage system according to an embodiment of this application;
FIG. 12 is a diagram of a circuit topology corresponding to the energy storage system in FIG. 11 according to an embodiment of this application;
FIG. 13 is a diagram of another energy storage system according to an embodiment of this application;
FIG. 14 is a diagram of a circuit topology corresponding to the energy storage system in FIG. 13 according to an embodiment of this application;
FIG. 15 is a diagram of another energy storage system according to an embodiment of this application;
FIG. 16 is a diagram of another energy storage system according to an embodiment of this application;
FIG. 17 is a diagram of another energy storage system according to an embodiment of this application;
FIG. 18 is a diagram of another energy storage system according to an embodiment of this application;
FIG. 19 is a diagram of another energy storage system according to an embodiment of this application; and
FIG. 20 is a schematic flowchart of a control method for an energy storage system according to an embodiment of this application.

### DESCRIPTION OF EMBODIMENTS

The following describes technical solutions of this application with reference to accompanying drawings.

In the descriptions of embodiments of this application, "/" means "or", unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In the accompanying drawings, same or similar reference numerals indicate same or similar elements or elements having same or similar functions. The following embodiments described with reference to the accompanying drawings are examples, and are merely intended to explain this application, but should not be construed as a limitation on this application.

In this application, the terms "first", "second", "third", "fourth", and the like (if existent) are intended to distinguish between similar objects but do not necessarily describe a specific order or sequence. It should be understood that data used in such a way is interchangeable in appropriate circumstances, so that embodiments of this application described herein can be implemented in orders other than those illustrated or described herein. Sequence numbers of the following processes do not mean a sequence of execution. The sequence of execution of the processes should be determined according to functions and internal logic of the processes, and should not constitute any limitation on an implementation process of embodiments of this application. For example, in embodiments of this application, words such as "110", "210", and "220" are merely identifiers for ease of description, and do not limit an apparatus.

Reference to "some embodiments" or the like described in this specification means that specific features, structures, or characteristics described with reference to the embodiments are included in one or more embodiments of this application. Therefore, statements such as "in some embodiments" that appear at different places in this specification do not necessarily mean referring to a same embodiment, but mean "one or more but not all of embodiments", unless otherwise specifically emphasized in another manner. The terms "include", "contain", "have", and variations thereof all mean "including but not limited to", unless otherwise specifically emphasized in another manner.

The terms used in embodiments of this disclosure are merely for the purpose of describing specific embodiments, but are not intended to limit embodiments of this disclosure. Terms "a" and "the" in singular forms in embodiments of this disclosure and the appended claims are also intended to include plural forms, unless otherwise stated in the context clearly. It should be further understood that, the term "and/or" used herein indicates and includes any or all possible combinations of one or more associated listed items.

It should be noted that, in embodiments of this application, "connection" means an electrical connection, and a connection between two electrical elements may be a direct or indirect connection between the two electrical elements. For example, that A is connected to B may be that A is directly connected to B, or may be that A is indirectly connected to B through one or more other electrical elements. For example, that A is connected to B may alternatively be that A is directly connected to C, and C is directly connected to B, so that A is connected to B through C.

An application scenario of this application is first described. An energy storage system provided in this application is applicable to a plurality of application fields such as the energy storage and power generation field, the photovoltaic power generation field, the new energy smart microgrid field, and the power transmission and distribution field. The energy storage system provided in this application may include a power conversion system (PCS), a photovoltaic inverter, a DC/DC converter, and the like, and is applicable to different application scenarios, for example, an energy storage and power supply scenario, a photovoltaic power supply scenario, a photovoltaic energy storage hybrid power supply scenario, and an uninterruptible power supply (UPS) power supply scenario. The following provides descriptions by using the energy storage and power supply scenario as an example.

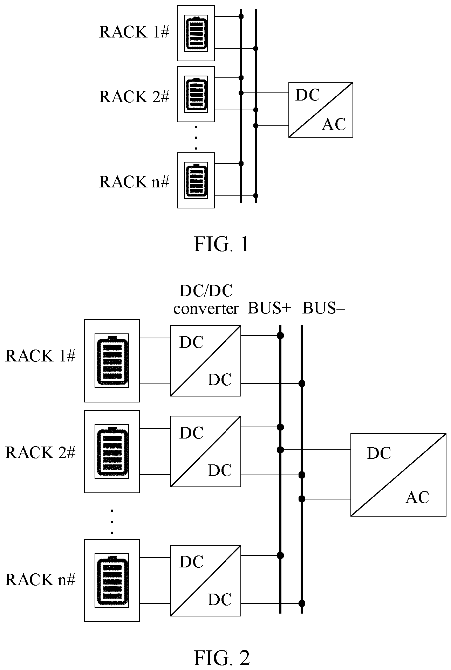

FIG. 1 is a diagram of an architecture of a conventional energy storage system. As shown in FIG. 1, in the architecture of the conventional energy storage system, a plurality of battery racks are directly connected in parallel to a direct current side of a direct current/alternating current (DC/AC) converter. However, due to differences in factors such as individual capacities of cells in the clusters and battery internal resistance, SOC of batteries in different battery racks are different. In addition, temperatures of actual operating environments of the battery racks cannot be kept completely consistent. As a result, a plurality of battery racks connected in parallel inevitably encounter a SOC and cluster voltage mismatch problem.

FIG. 2 is a diagram of an architecture of another conventional energy storage system. As shown in FIG. 2, the energy storage system includes n battery racks (that is, RACK 1#, RACK 2#, ..., and RACK n#), n DC/DC converters, a positive direct current bus BUS+, a negative direct current bus BUS-, and a DC/AC converter. Input ends of each DC/DC converter in the n DC/DC converters are connected to one battery rack, and output ends of the n DC/DC converters are all separately connected to the positive direct current bus BUS+ and the negative direct current bus BUS-. Input ends of the DC/AC converter are separately connected to the positive direct current bus BUS+ and the negative direct current bus BUS-. It can be learned from the diagram of the structure of the energy storage system shown in FIG. 2 that, in the energy storage system, a corresponding DC/DC converter is disposed in a power transmission branch of each battery rack, to balance SOCs of different battery racks, so that the battery racks can operate independently, and different battery racks do not affect each other. This resolves a problem of a state of charge and voltage mismatch between a plurality of battery racks that is caused due to parallel connection of the battery racks.

However, because the DC/DC converter is disposed in the power transmission branch of the battery rack, and needs to transmit all power, a power transmission loss of the DC/DC converter is relatively large, and a severe heat dissipation problem is caused.

In view of this, embodiments of this application provide a power conversion device, an energy storage system, and a control method therefor, to improve operating efficiency in some scenarios.

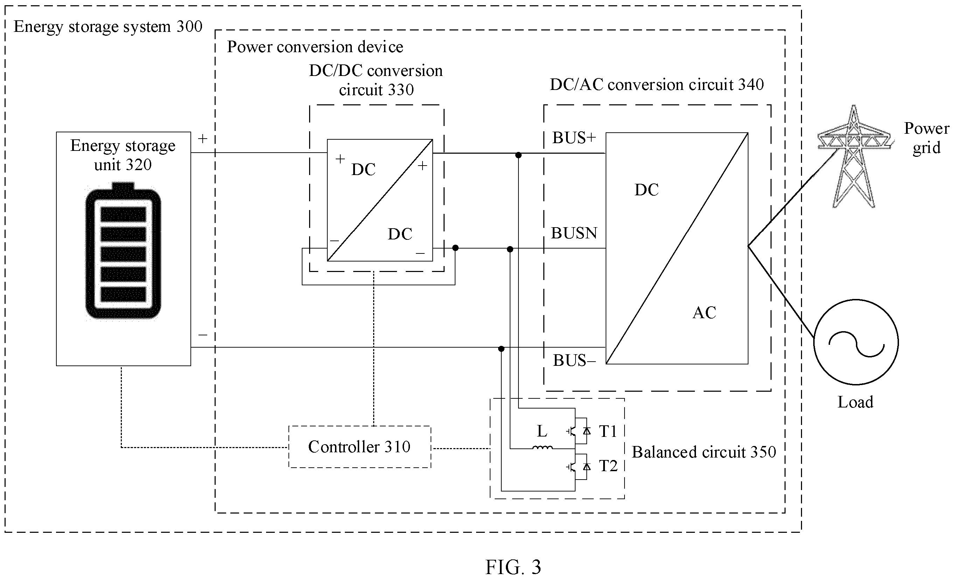

With reference to FIG. 3 to FIG. 19, the following describes in detail possible structures of the power conversion device and the energy storage system in embodiments of this application and describes operating principles of the power conversion device and the energy storage system by using examples. It should be understood that the examples in FIG. 3 to FIG. 19 are merely intended to help a person skilled in the art understand embodiments of this application, but are not intended to limit embodiments of this application to specific structures or specific scenarios in FIG. 3 to FIG. 19. It is clear that a person skilled in the art can make various equivalent modifications or changes based on the provided examples, and such modifications and changes also fall within the scope of embodiments of this application.

The energy storage system provided in embodiments of this application includes an energy storage unit, a DC/DC conversion circuit, and a DC/AC conversion circuit. A first end of the DC/DC conversion circuit is connected to the energy storage unit, a second end of the DC/DC conversion circuit is connected to a first end of the DC/AC conversion circuit, the first end of the DC/AC conversion circuit includes a positive bus, a negative bus, and a neutral line, and a second end of the DC/AC conversion circuit is configured to connect to an alternating current power grid and/or a load. An input voltage of the DC/DC conversion circuit is a voltage between the positive bus and a positive end of the energy storage unit, or a voltage between a positive end of the energy storage unit and the neutral line, or a voltage between the neutral line and a negative end of the energy storage unit, or a voltage between a negative end of the energy storage unit and the negative bus. An output voltage of the DC/DC conversion circuit is half of a direct current bus voltage.

Specifically, the DC/DC conversion circuit includes a first DC/DC conversion circuit, a negative end of a first end of the first DC/DC conversion circuit is connected to the positive end of the energy storage unit, a positive end of the first end of the first DC/DC conversion circuit and a positive end of a second end of the first DC/DC conversion circuit are connected to the positive bus, and a negative end of the second end of the first DC/DC conversion circuit is connected to the neutral line. Alternatively, a positive end of a first end of the first DC/DC conversion circuit is connected to the positive end of the energy storage unit, a positive end of a second end of the first DC/DC conversion circuit is connected to the positive bus of the DC/AC conversion circuit, and a negative end of the first end of the first DC/DC conversion circuit and a negative end of the second end of the first DC/DC conversion circuit are connected to the neutral line. Alternatively, the DC/DC conversion circuit includes a second DC/DC conversion circuit, a negative end of a first end of the second DC/DC conversion circuit is connected to the negative end of the energy storage unit, a negative end of a second end of the second DC/DC conversion circuit is connected to the negative bus, and a positive end of the first end of the second DC/DC conversion circuit and a positive end of the second end of the second DC/DC conversion circuit are connected to the neutral line. Alternatively, a positive end of a first end of the second DC/DC conversion circuit is connected to the negative end of the energy storage unit, a positive end of a second end of the second DC/DC conversion circuit is connected to the neutral line of the DC/AC conversion circuit, and a negative end of the first end of the second DC/DC conversion circuit and a negative end of the second end of the second DC/DC conversion circuit are connected to the negative bus.

FIG. 3 is a diagram of an energy storage system 300 according to an embodiment of this application. As shown in FIG. 3, the energy storage system 300 provided in this embodiment of this application includes a DC/DC conversion circuit 330 (an example of the first DC/DC conversion circuit) and a DC/AC conversion circuit 340.

It should be noted that, when the DC/DC conversion circuit is connected to an energy storage unit, the DC/DC conversion circuit 330 may be disposed in a DC/DC converter or a PCS, and the DC/AC conversion circuit 340 may be disposed in a DC/AC converter. When the DC/DC conversion circuit is connected to a photovoltaic string, the DC/DC conversion circuit 330 may be disposed in a photovoltaic inverter or a photovoltaic optimizer. In different application scenarios, the DC/DC conversion circuit 330 and the DC/AC conversion circuit 340 may be disposed in a same power conversion device. For example, the DC/DC conversion circuit 330 and the DC/AC conversion circuit 340 are disposed in one PCS. Alternatively, the DC/DC conversion circuit 330 and the DC/AC conversion circuit 340 are separately disposed in different power conversion devices. For example, the DC/DC conversion circuit 330 is disposed in a DC/DC converter, and the DC/AC conversion circuit 340 is disposed in a DC/AC inverter. This is not limited in this application.

It should be understood that the DC/AC converter in this embodiment of this application may further include some or all of a boost circuit, a buck circuit, and a filter circuit. This is not limited in this application.

In this embodiment of this application, a first end of the DC/AC conversion circuit 340 includes a positive bus BUS+, a negative bus BUS-, and a neutral line BUSN, and a second end of the DC/AC conversion circuit 340 is configured to connect to an alternating current power grid or a load through an alternating current bus. A first end of the DC/DC conversion circuit 330 is connected between a positive end of an energy storage unit 320 and the neutral line BUSN. A negative end of the energy storage unit 320 is connected to the negative bus BUS-, and a second end of the DC/DC conversion circuit 330 is connected to the DC/AC conversion circuit 340 through the positive bus BUS+ and the neutral line BUSN. Specifically, a positive end of the first end of the DC/DC conversion circuit 330 is connected to the positive end of the energy storage unit 320, a positive end of the second end of the DC/DC conversion circuit 330 is connected to the positive bus BUS+ of the DC/AC conversion circuit 340, and a negative end of the first end of the DC/DC conversion circuit 330 and a negative end of the second end of the DC/DC conversion circuit 330 are connected to the neutral line BUSN.

In the foregoing connection manner, an input voltage of the DC/DC conversion circuit is a voltage between the positive end of the energy storage unit 320 and the neutral line BUSN, and an output voltage of the DC/DC conversion circuit is half of a direct current bus voltage. The direct current bus voltage is a voltage between the positive bus and the negative bus.

In this way, using discharging of the energy storage unit 320 as an example, the input voltage and the output voltage of the DC/DC conversion circuit 330 do not completely withstand an output voltage of the energy storage unit 320 and a bus voltage. In other words, the DC/DC conversion circuit can not only boost or buck a voltage from the energy storage unit 320 to a direct current bus, but also reduce a power loss in a normal operating process. The DC/DC conversion circuit 330 may be a bidirectional DC/DC conversion circuit. This design can also achieve same effect when the energy storage unit 320 is charged. It should be understood that inputs and outputs of a charging process and a discharging process of the energy storage unit 320 are opposite.

In some embodiments, the DC/DC conversion circuit 330, a balanced circuit 350, and the DC/AC conversion circuit 340 are all bidirectional conversion circuits, and can implement charging or discharging of the energy storage unit 320. The DC/AC conversion circuit 340 is configured to perform bidirectional conversion for a direct current of the energy storage unit 320 and an alternating current of the alternating current power grid or the load. For example, the DC/AC conversion circuit 340 is configured to: convert the direct current of the energy storage unit 320 into an alternating current and transmit the alternating current to the load, where the load may be an electrical device; or after converting an alternating current into a direct current, transmit the direct current to the energy storage unit 320 for storage.

In some embodiments, the DC/DC conversion circuit 330 may be an isolated DC/DC conversion circuit or a non-isolated DC/DC conversion circuit, and the DC/DC conversion circuit may implement boost and/or buck. In other words, the DC/DC conversion circuit 330 may be a buck-boost conversion circuit, a boost conversion circuit, or a buck conversion circuit. This is not limited in this application. A topology structure of the DC/AC conversion circuit 340 may be a two-level topology, a three-level topology, a multi-level topology, or any other structure. In other words, the DC/AC conversion circuit 340 may be a two-level conversion circuit, a three-level conversion circuit, or a multi-level conversion circuit. Both the first end and the second end of the DC/DC conversion circuit 330 provided in this application are input/output bidirectional ends. Herein, the input/output bidirectional end may be used as a terminal of an input end, and may be used as a terminal of an output end. Correspondingly, the first end and the second end of the DC/AC conversion circuit 340 are also input/output bidirectional ends.

It should be understood that, in an energy storage scenario, the energy storage unit 320 may include at least one battery rack, or a plurality of battery racks are connected in parallel, and one battery rack may include a plurality of battery strings connected in series. The battery string may be a battery pack, and one battery pack may include one or more battery cells (a voltage of the battery cell is usually between 2.5 V and 4.2 V) connected in series and parallel, to form a smallest energy storage unit. For example, the energy storage unit 320 may be a storage battery, or may be an energy storage container, or may be an apparatus used for energy storage in another form.

The following uses a three-level DC/AC conversion circuit as an example for description.

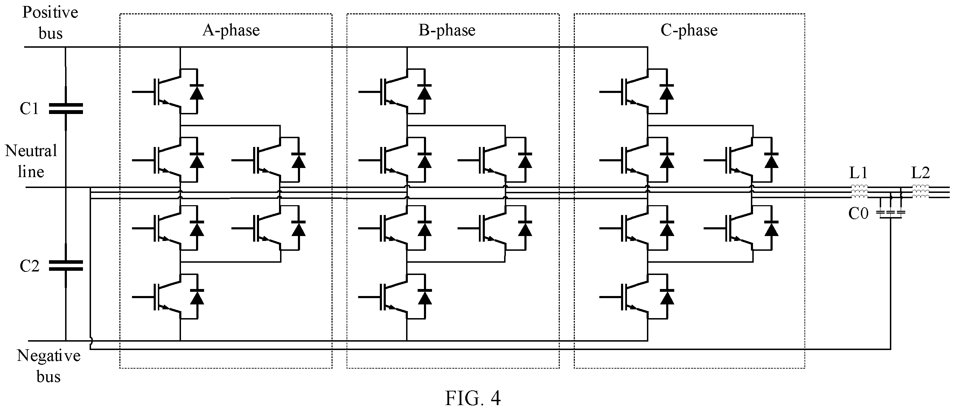

FIG. 4 is a topological diagram of a three-phase three-level DC/AC conversion circuit according to this application. As shown in FIG. 4, the DC/AC conversion circuit includes an A-phase circuit, a B-phase circuit, a C-phase circuit, and several capacitors and inductors. The DC/AC conversion circuit may receive a current through a positive bus, a negative bus, and a neutral line. A positive bus capacitor C1 and a negative bus capacitor C2 are connected in series between the positive bus and the negative bus. After the current passes through the A-phase circuit, the B-phase circuit, and the C-phase circuit, the current is output through a filter inductor L 1. Currents output by the A-phase circuit, the B-phase circuit, and the C-phase circuit converge after passing through a capacitor C0 and flow into a series connection point between the capacitor C1 and the capacitor C2. The currents output by the A-phase circuit, the B-phase circuit, and the C-phase circuit supply power to a load after passing through an inductor L2. A series branch of the capacitor C1 and the capacitor C2 is connected in parallel to the A-phase circuit, the B-phase circuit, and the C-phase circuit. A circuit of each phase includes an upper bridge arm, a lower bridge arm, and a bypass branch, where the upper bridge arm, the lower bridge arm, and the bypass branch each include a switching transistor and a diode that is connected in parallel. In this application, the switching transistor is turned on or off based on a drive signal input into the switching transistor, so that the DC/AC conversion circuit can output three levels in one cycle.

It should be understood that the switching transistor in FIG. 4 may be a giant transistor (GTR), a metal-oxide-semiconductor field-effect transistor (MOSFET), an insulated gate bipolar transistor (IGBT), a gate turn-off thyristor (GTO), or another suitable device.

In this embodiment of this application, as shown in FIG. 3, the positive end of the first end of the DC/DC conversion circuit 330 is connected to the positive end of the energy storage unit 320, the negative bus BUS- is connected to the negative end of the energy storage unit 320, the positive end of the second end of the DC/DC conversion circuit 330 is connected to the positive bus BUS+ of the DC/AC conversion circuit 340, and the negative end of the first end of the DC/DC conversion circuit 330 and the negative end of the second end of the DC/DC conversion circuit 330 are connected to the neutral line BUSN. In other words, the DC/DC conversion circuit 330 in this application needs to withstand a voltage of only the positive bus, and needs to transmit only a part of power, so that a voltage at the first end, namely, an input side, of the DC/DC conversion circuit 330 is relatively low, and transmission power of the DC/DC conversion circuit 330 is reduced. In this way, a switching transistor with a relatively low withstand voltage can be selected, and an energy loss in the DC/DC conversion circuit 330 can be reduced, thereby avoiding problems of a large loss and low efficiency of a full-power DC/DC converter. In this way, operating efficiency of the energy storage system can be improved, and heat dissipation can be reduced.

Specifically, the first end and the second end of the DC/DC conversion circuit 330 each include a positive end and a negative end. When the first end of the DC/DC conversion circuit 330 is connected between the positive end of the energy storage unit 320 and the neutral line BUSN, as shown in FIG. 3, the positive end of the energy storage unit 320 is connected to the positive end of the first end of the DC/DC conversion circuit 330, and the negative end of the first end of the DC/DC conversion circuit 330 is connected to the neutral line BUSN. The positive end of the second end of the DC/DC conversion circuit 330 is connected to the DC/AC conversion circuit 340 through the positive bus, and the negative end of the second end of the DC/DC conversion circuit 330 is connected to the DC/AC conversion circuit 340 through the neutral line.

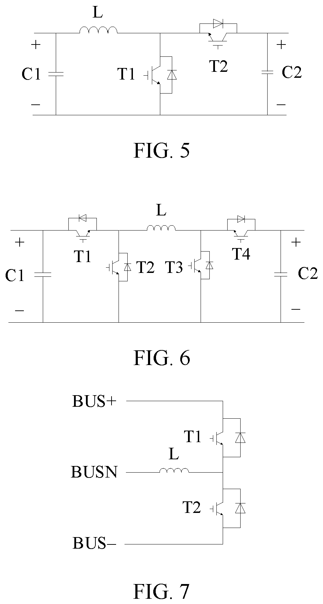

FIG. 5 is a diagram of a DC/DC conversion circuit according to an embodiment of this application.

It should be understood that the DC/DC conversion circuit 330 usually includes a switching transistor, a capacitor, and an inductor. As shown in FIG. 5, the DC/DC conversion circuit 330 may be a bidirectional boost circuit, and includes capacitors C1 and C2, an inductor L, a first switching transistor T1, and a second switching transistor T2. In this application, there may further be another topology structure, as shown in FIG. 6. In FIG. 6, the DC/DC conversion circuit is a bidirectional buck-boost conversion circuit. Turn-on and turn-off of the switching transistor are controlled, so that the DC/DC conversion circuit can implement boost conversion or buck conversion.

In some embodiments, the energy storage system includes the balanced circuit, and the balanced circuit is configured to reduce a difference between a voltage from the positive bus to the neutral line and a voltage from the neutral line to the negative bus.

Specifically, as shown in FIG. 3, the balanced circuit 350 includes a first end, a second end, and a third end. The first end of the balanced circuit 350 is connected to the positive bus BUS+, the second end of the balanced circuit 350 is connected to the negative bus BUS-, and the third end of the balanced circuit 350 is connected to the neutral line BUSN.

In some embodiments, the balanced circuit 350 includes a plurality of switching transistors. It should be understood that the balanced circuit 350 may include a switching transistor and a balanced inductor, as shown in FIG. 7. FIG. 7 is a diagram of the balanced circuit 350 according to an embodiment of this application. The balanced circuit is a two-level circuit including a first switching transistor T1, a second switching transistor T2, and a balanced inductor L. Optionally, in this application, the first switching transistor T1 and the second switching transistor T2 may be controlled to be turned off, so that the balanced circuit does not operate, that is, does not output a current.

It should be understood that the foregoing two-level circuit is merely an example topology. The balanced circuit 350 in this application may alternatively be in another balanced circuit topology form, for example, a topology form such as an ANPC or an NPC.

In a possible implementation, the balanced circuit 350 and the DC/AC conversion circuit 340 may be disposed in a DC/AC converter or a power conversion device together.

In a possible implementation, the balanced circuit 350 is not in a DC/AC converter, but may be electrically connected to the DC/AC converter. The DC/AC converter may further include some or all of a boost circuit, a buck circuit, and a filter circuit. This is not limited in this application.

In some embodiments, the balanced circuit is configured to operate when an absolute value of a voltage difference between the positive bus and the negative bus is greater than or equal to a fourth voltage threshold, to reduce the difference between the voltage from the positive bus to the neutral line and the voltage from the neutral line to the negative bus, and the balanced circuit does not operate when the absolute value of the voltage difference between the positive bus and the negative bus is less than the fourth voltage threshold.

Optionally, the energy storage system 300 further includes a controller 310. The controller 310 is configured to: in response to that the absolute value of the voltage difference between the positive bus and the negative bus is greater than or equal to the fourth voltage threshold, control the balanced circuit to operate, to reduce the difference between the voltage from the positive bus to the neutral line and the voltage from the neutral line to the negative bus, so as to maintain voltage balance between the positive bus and the negative bus. In response to that the absolute value of the voltage difference between the positive bus and the negative bus is less than the fourth voltage threshold, the balanced circuit is controlled not to operate.

Specifically, the controller 310 may obtain a voltage of a direct current bus of the DC/AC conversion circuit 340. When the absolute value of the voltage difference between the positive bus and the negative bus is greater than or equal to the fourth voltage threshold, the controller 310 controls the balanced circuit 350 to operate, to reduce the difference between the voltage from the positive bus BUS+ to the neutral line BUSN and the voltage from the neutral line BUSN to the negative bus BUS-. In this way, voltage balance between the positive bus and the negative bus can be maintained. When the absolute value of the voltage difference between the positive bus and the negative bus is less than the fourth voltage threshold, the controller 310 controls the balanced circuit 350 not to operate. In this way, a loss of the balanced circuit 350 can be reduced. The fourth voltage threshold may be set based on factors such as experimental data, an operating condition environment, and a safety requirement. It should be understood that a manner of determining the fourth voltage threshold and a specific value setting are not limited in this application.

For example, if the fourth voltage threshold is 50 V, when the positive bus is 800 V and the negative bus is 700 V, that is, the absolute value of the voltage difference between the positive bus and the negative bus is greater than the fourth voltage threshold 50 V, the controller 310 controls the balanced circuit 350 to start to operate, to reduce the difference between the voltage from the positive bus to the neutral line and the voltage from the neutral line to the negative bus.

Optionally, the controller 310 may control output power of the balanced circuit 350 based on a bus current.

It should be noted that the balanced circuit in this embodiment of this application may be further applied to an energy storage system of another topology. This is not limited in this application.

It should be understood that the architecture of the energy storage system 300 in FIG. 3 is merely an example, and describes a possible connection manner of the first DC/DC conversion circuit. There may be another connection manner.

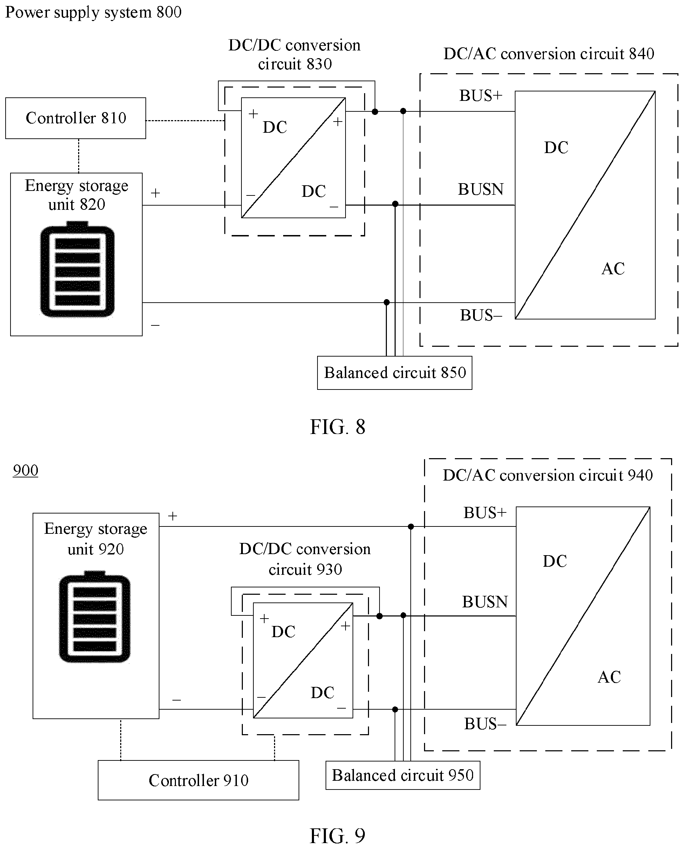

The following describes another connection manner of the first DC/DC conversion circuit in the energy storage system with reference to FIG. 8.

FIG. 8 is a diagram of an energy storage system 800 according to an embodiment of this application. It should be understood that, in this embodiment of this application, only a difference between FIG. 8 and FIG. 3 is described.

As shown in FIG. 8, a negative end of a first end of a DC/DC conversion circuit 830 is configured to connect to a positive end of an energy storage unit 820, a negative end of the energy storage unit 820 is connected to a DC/AC conversion circuit 840 through a negative bus BUS-, a positive end of the first end of the DC/DC conversion circuit 830 and a positive end of a second end of the DC/DC conversion circuit 830 are connected to a positive bus BUS+, and a negative end of the second end of the DC/DC conversion circuit 830 is connected to a neutral line BUSN.

It should be understood that, compared with the embodiment shown in FIG. 3, in this embodiment of this application, the first end of the DC/DC conversion circuit 830 is connected between the positive bus BUS+ and the positive end of the energy storage unit 820, and another end of the DC/DC conversion circuit 830 is connected to the DC/AC conversion circuit 840 through the positive bus BUS+ and the neutral line BUSN. In other words, an input voltage of the DC/DC conversion circuit 830 is a voltage between the positive bus BUS+ and the positive end of the energy storage unit 820, and an output voltage of the DC/DC conversion circuit 830 is half of a direct current bus voltage.

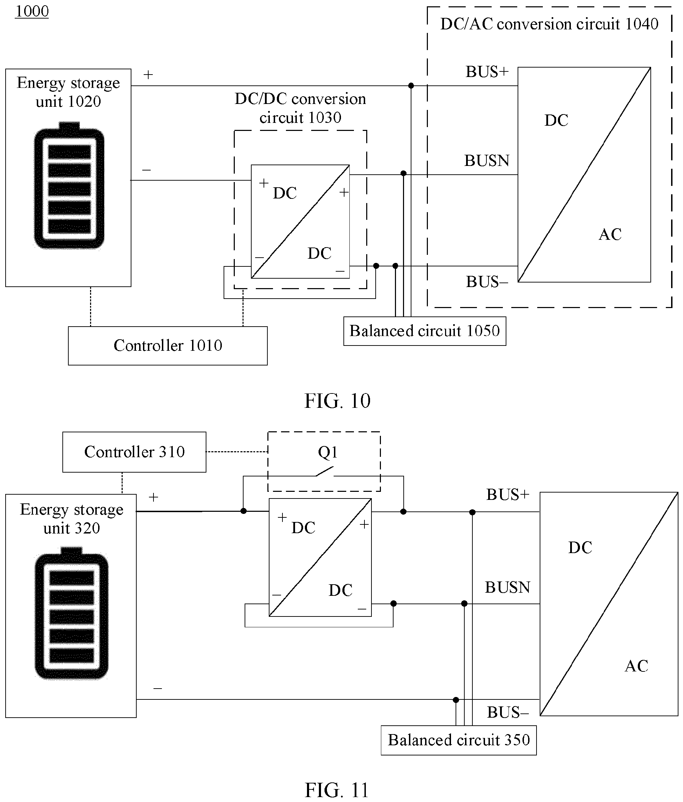

The following specifically describes connection manners of a second DC/DC conversion circuit in the energy storage system with reference to FIG. 9 and FIG. 10. It should be understood that connection manners of the DC/DC conversion circuits in FIG. 9 and FIG. 10 may be considered as symmetrical structures of the DC/DC conversion circuits shown in FIG. 3 and FIG. 8. Connection manners of the DC/DC conversion circuits shown in FIG. 9 and FIG. 10 are different from those of the DC/DC conversion circuits shown in FIG. 3 and FIG. 8.

FIG. 9 is a diagram of an energy storage system 900 according to an embodiment of this application. It should be understood that, in this embodiment of this application, only a difference between FIG. 9 and FIG. 3 is described.

As shown in FIG. 9, a negative end of a first end of a DC/DC conversion circuit 930 (an example of the second DC/DC conversion circuit) is connected to a negative end of an energy storage unit 920, a negative end of a second end of the DC/DC conversion circuit 930 is connected to a negative bus BUS-, and a positive end of the first end of the DC/DC conversion circuit 930 and a positive end of the second end of the DC/DC conversion circuit 930 are connected to a neutral line BUSN.

It should be understood that, compared with the embodiment shown in FIG. 3, in this embodiment of this application, the first end of the DC/DC conversion circuit 930 is connected between the negative end of the energy storage unit 920 and the neutral line BUSN, another end of the DC/DC conversion circuit 930 is connected to a DC/AC conversion circuit 940 through the negative bus BUS- and the neutral line BUSN, and a positive bus BUS+ is configured to connect to a positive end of the energy storage unit 920. In other words, an input voltage of the DC/DC conversion circuit 930 is a voltage between the neutral line BUSN and the negative end of the energy storage unit 920, and an output voltage of the DC/DC conversion circuit 930 is half of a direct current bus voltage.

The following describes another connection manner of the second DC/DC conversion circuit in the energy storage system with reference to FIG. 10. It should be understood that, in this embodiment of this application, only a difference between FIG. 10 and FIG. 9 is described.

FIG. 10 is a diagram of an energy storage system 1000 according to an embodiment of this application. As shown in FIG. 10, a positive end of a first end of a DC/DC conversion circuit 1030 is connected to a negative end of an energy storage unit 1020, a positive end of a second end of the DC/DC conversion circuit 1030 is connected to a neutral line BUSN of a DC/AC conversion circuit 1040, and a negative end of the first end of the DC/DC conversion circuit 1030 and a negative end of the second end of the DC/DC conversion circuit 1030 are connected to a negative bus BUS-. In this way, an input voltage of the DC/DC conversion circuit 1030 is a voltage between the negative end of the energy storage unit 1020 and the negative bus BUS-, and an output voltage of the DC/DC conversion circuit 1030 is half of a direct current bus voltage.

It should be understood that, compared with the embodiment shown in FIG. 9, in this embodiment of this application, the first end of the DC/DC conversion circuit 1030 is connected between the negative bus BUS- and the negative end of the energy storage unit 1020, another end of the DC/DC conversion circuit 1030 is connected to the DC/AC conversion circuit 1040 through the negative bus BUS- and the neutral line BUSN, and a positive bus BUS+ is configured to connect to a positive end of the energy storage unit 1020.

It should be understood that, compared with the first DC/DC conversion circuit, in the second DC/DC conversion circuit provided in this embodiment of this application, the second end of the second DC/DC conversion circuit is connected to a negative half bus of the DC/AC conversion circuit.

In some embodiments, the energy storage system further includes a first switch, and the first switch is connected in parallel between the positive end of the first end of the first DC/DC conversion circuit and the positive end of the second end of the first DC/DC conversion circuit. Alternatively, the first switch is connected in parallel between the negative end of the first end of the first DC/DC conversion circuit and the positive end of the second end of the first DC/DC conversion circuit. Alternatively, the first switch is connected in parallel between the negative end of the first end of the second DC/DC conversion circuit and the negative end of the second end of the second DC/DC conversion circuit. Alternatively, the first switch is connected in parallel between the positive end of the first end of the second DC/DC conversion circuit and the negative end of the second end of the second DC/DC conversion circuit.

Specifically, when a voltage between the positive end and the negative end of the energy storage unit is greater than or equal to a first voltage threshold, the first switch is turned on, and the first DC/DC conversion circuit does not operate. When a voltage between the positive end and the negative end of the energy storage unit is less than the first voltage threshold, the first switch is turned off, and the first DC/DC conversion circuit operates, so that a voltage from the positive bus to the negative bus meets a target input voltage of the DC/AC conversion circuit.

Optionally, the controller is configured to: in response to that the voltage between the positive end and the negative end of the energy storage unit is greater than or equal to the first voltage threshold, control the first switch to be turned on, and control the DC/DC conversion circuit not to operate; or in response to that the voltage between the positive end and the negative end of the energy storage unit is less than the first voltage threshold, control the first switch to be turned off, and control the second DC/DC conversion circuit to operate, so that the voltage from the positive bus to the negative bus meets the target input voltage of the DC/AC conversion circuit.

The following describes a specific connection manner of the first switch with reference to FIG. 11 to FIG. 16.

FIG. 11 is a diagram of an energy storage system according to an embodiment of this application. It should be understood that, in this embodiment of this application, only a difference between FIG. 11 and FIG. 3 is described.

As shown in FIG. 11, the energy storage system further includes a switch Q1. The switch Q1 is connected in parallel between the positive end of the first end of the DC/DC conversion circuit and the positive end of the second end of the DC/DC conversion circuit. Specifically, when the positive end of the first end of the DC/DC conversion circuit is connected to the positive end of the energy storage unit 320, one end of the switch Q1 is connected to the positive end of the first end of the DC/DC conversion circuit, and another end of the switch Q1 is connected to the positive end of the second end of the DC/DC conversion circuit. When the switch Q1 is turned on, the positive end of the energy storage unit 320 may be connected to the positive bus BUS+ of the DC/AC conversion circuit through the switch Q1.

In this embodiment of this application, the controller 310 may obtain the voltage between the positive end and the negative end of the energy storage unit 320. When the voltage between the positive end and the negative end of the energy storage unit 320 is greater than or equal to the first voltage threshold, the switch Q1 is controlled to be turned on, and the DC/DC conversion circuit is controlled not to operate. In other words, the positive end of the energy storage unit 320 may be connected to the positive bus of the DC/AC conversion circuit through the switch Q1. In this way, an energy loss caused by operation of the DC/DC conversion circuit can be further avoided, and then efficiency of the energy storage system can be improved. When the voltage of the energy storage unit 320 is less than the first voltage threshold, the switch Q1 is controlled to be turned off, and the DC/DC conversion circuit is controlled to operate, so that the voltage from the positive bus to the negative bus meets the target input voltage of the DC/AC conversion circuit 340. In other words, the DC/DC conversion circuit may compensate for a voltage difference between the voltage of the energy storage unit and a bus voltage. The bus voltage is the voltage between the positive bus and the negative bus.

For example, in a photovoltaic power generation scenario, an output voltage of a solar cell changes under an action of an MPPT function of a photovoltaic inverter due to a change in an environment condition such as light or a temperature. When the output voltage of the solar cell is greater than the first voltage threshold, for example, a voltage of a direct current bus required by operation of the DC/AC conversion circuit, that is, when the output voltage of the solar cell is greater than or equal to the voltage between the positive bus and the negative bus, the controller controls the switch Q1 to be turned on, and controls the DC/DC conversion circuit to stop operating. In this case, the photovoltaic inverter operates in a bypass state.

For example, the first voltage threshold may be set to 300 V When the voltage of the energy storage unit 320 is 320 V, that is, the voltage of the energy storage unit 320 is greater than the first voltage threshold, the controller 310 controls the switch Q1 to be turned on, and controls the DC/DC conversion circuit not to operate, thereby reducing a power loss in the DC/DC conversion circuit. It should be understood that a manner of determining the first voltage threshold and a specific value setting are not limited in this application.

In some embodiments, the target input voltage may be determined based on operating statuses of the DC/DC conversion circuit and the DC/AC conversion circuit.

Optionally, the switch Q1 may be an insulated gate bipolar transistor IGBT, or may be a field-effect transistor MOSFET. Two ends of the switch Q1 are respectively a positive end and a negative end. Q1 may alternatively be another controlled switch, for example, a relay. Conductive impedance of a branch in which the switch Q1 is located should be less than path impedance when the DC/DC conversion circuit does not operate.

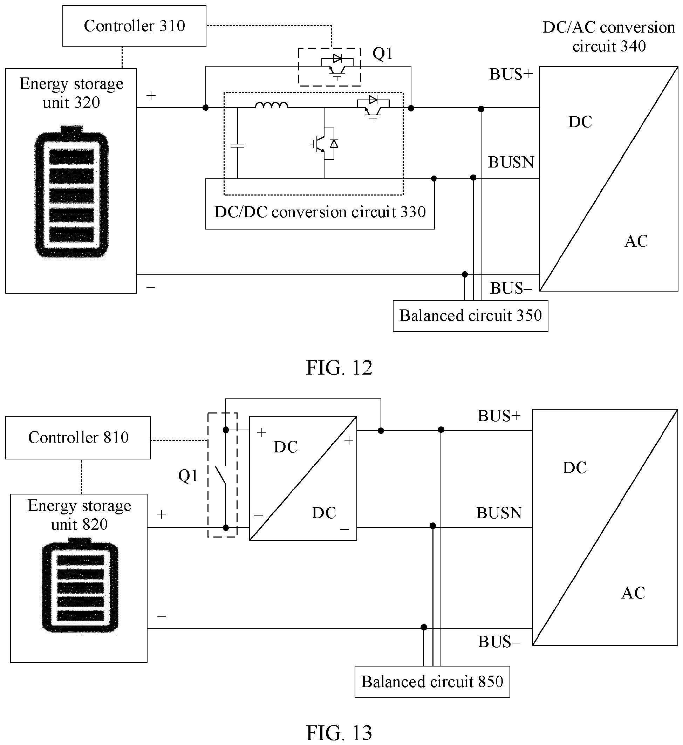

FIG. 12 is a diagram of a circuit topology corresponding to the energy storage system in FIG. 11 according to an embodiment of this application.

FIG. 13 is a diagram of another energy storage system according to an embodiment of this application. It should be understood that, in this embodiment of this application, only a difference between FIG. 13 and FIG. 8 is described.

As shown in FIG. 13, when the negative end of the first end of the DC/DC conversion circuit is connected to the positive end of the energy storage unit, the switch Q1 is connected in parallel to the negative end of the first end of the DC/DC conversion circuit and the positive end of the second end of the DC/DC conversion circuit. Specifically, the positive end of the energy storage unit 820 is connected to the negative end of the first end of the DC/DC conversion circuit, one end of the switch Q1 is connected to the negative end of the first end of the DC/DC conversion circuit, and another end of the switch Q1 is connected to the positive end of the second end of the DC/DC conversion circuit. When the switch Q1 is turned on, the positive end of the energy storage unit 320 may be connected to the positive bus of the DC/AC conversion circuit through the switch Q1.

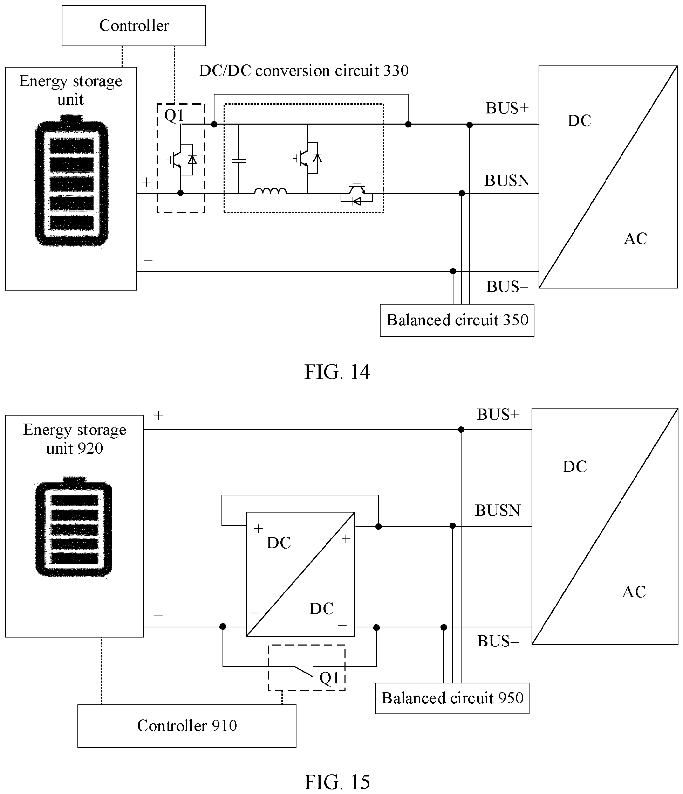

FIG. 14 is a diagram of a circuit topology corresponding to the energy storage system in FIG. 13 according to an embodiment of this application.

As shown in FIG. 14, the positive end of the first end of the DC/DC conversion circuit 330 is connected to the positive bus BUS+. When one end of the switch Q1 is connected to the negative end of the first end of the DC/DC conversion circuit, and another end of the switch Q1 is connected to the positive end of the second end of the DC/DC conversion circuit, the positive end of the energy storage unit may be connected to the positive bus of the DC/AC conversion circuit through the switch Q1 and the DC/DC conversion circuit 330.

It should be noted that, in the energy storage systems shown in FIG. 11 to FIG. 14, a connection of the first DC/DC conversion circuit is used as an example for description, and the first switch may also be disposed in the energy storage system of the second DC/DC conversion circuit.

FIG. 15 is a diagram of another energy storage system according to an embodiment of this application. It should be understood that, in this embodiment of this application, only a difference between FIG. 15 and FIG. 9 is described.

As shown in FIG. 15, the switch Q1 is connected in parallel between the negative end of the first end of the DC/DC conversion circuit and the negative end of the second end of the DC/DC conversion circuit. When the switch Q1 is turned on, the negative end of the energy storage unit 920 is connected to the negative bus of the DC/AC conversion circuit through the switch Q1.

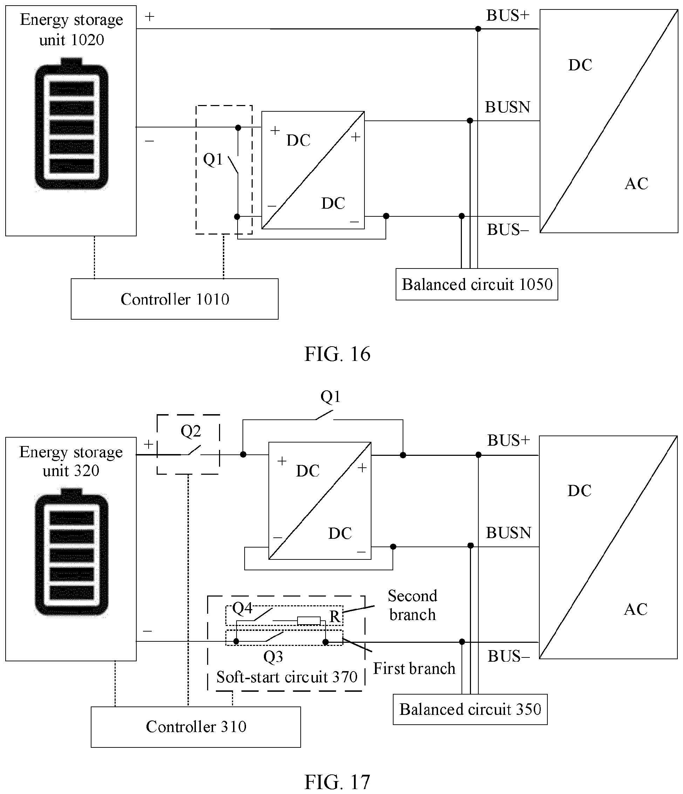

FIG. 16 is a diagram of another energy storage system according to an embodiment of this application. It should be understood that, in this embodiment of this application, only a difference between FIG. 16 and FIG. 10 is described.

As shown in FIG. 16, the switch Q1 is connected in parallel between the positive end of the first end of the DC/DC conversion circuit and the negative end of the second end of the DC/DC conversion circuit. When the switch Q1 is turned on, the negative end of the energy storage unit 1020 is connected to the negative bus of the DC/AC conversion circuit through the switch Q1.

In some embodiments, the energy storage system includes a second switch, and the second switch is configured to be connected in series between the positive end of the energy storage unit and the first end of the first DC/DC conversion circuit. Alternatively, the second switch is configured to be connected in series between the negative end of the energy storage unit and the negative bus. Alternatively, the second switch is configured to be connected in series between the negative end of the energy storage unit and the first end of the second DC/DC conversion circuit. Alternatively, the second switch is configured to be connected in series between the positive end of the energy storage unit and the positive bus.

Specifically, when the voltage between the positive end and the negative end of the energy storage unit is less than or equal to a second voltage threshold, the second switch is turned off.

Optionally, the controller is configured to: in response to that the voltage between the positive end and the negative end of the energy storage unit is less than or equal to the second voltage threshold, control the second switch to be turned off.

It should be understood that the second switch may be applied to the energy storage systems shown in FIG. 3 and FIG. 8 to FIG. 17. Specifically, the following uses an example in which the second switch is connected in series between the positive end of the energy storage unit and the first end of the first DC/DC conversion circuit for description.

FIG. 17 is a diagram of another energy storage system according to an embodiment of this application. It should be understood that, in this embodiment of this application, only a difference between FIG. 17 and FIG. 11 is described.

As shown in FIG. 17, the energy storage system further includes a switch Q2. The switch Q2 is connected in series between the positive end of the energy storage unit 320 and the first end of the DC/DC conversion circuit. Specifically, the switch Q2 is connected in series to the positive end of the energy storage unit 320. Correspondingly, the switch Q2 is connected in series to the positive end of the first end of the DC/DC conversion circuit.

Optionally, the switch Q2 is connected in series between the negative end of the energy storage unit 320 and the negative bus. In other words, the switch Q2 may be connected in series between the negative end of the energy storage unit 320 and the negative bus BUS- of the DC/AC conversion circuit.

The controller 310 may obtain an input voltage of the energy storage unit 320 through a detection circuit. When the input voltage of the energy storage unit 320 is less than or equal to the second voltage threshold, the controller 310 controls the switch Q2 to be turned off, to protect the DC/DC conversion circuit from overstress. Optionally, when the input voltage of the energy storage unit 320 is greater than the second voltage threshold, the controller 310 controls the switch Q2 to be turned on.

In this way, when it is detected that the voltage between the positive end and the negative end of the energy storage unit is less than a specific threshold, that is, when the energy storage unit is short-circuited, the energy storage unit can be quickly disconnected, to protect a device in the energy storage system and avoid overstress of the DC/DC conversion circuit.

In this application, the second voltage threshold may be determined based on a requirement in an actual use process, for example, determined based on an input voltage at which the energy storage unit operates normally. For example, the second voltage threshold may be set to 200 V It should be understood that a manner of determining the second voltage threshold and a specific value setting are not limited in this application.

In some embodiments, the energy storage system includes a soft-start circuit, and the soft-start circuit includes a first branch and a second branch. It should be understood that the soft-start circuit may be applied to the energy storage systems shown in FIG. 3 and FIG. 8 to FIG. 17.

Specifically, the first branch is configured to be connected in series between the positive end of the energy storage unit and the first end of the first DC/DC conversion circuit, or the first branch is configured to be connected in series between the negative end of the energy storage unit and the negative bus, or the first branch is configured to be connected in series between the negative end of the energy storage unit and the first end of the second DC/DC conversion circuit, or the first branch is configured to be connected in series between the positive end of the energy storage unit and the positive bus. The second branch is connected in parallel to two ends of the first branch, and the second branch is connected in series to a first resistor. It should be understood that a connection manner of the first branch in the energy storage system is similar to a connection manner of the second switch.

In some embodiments, when the energy storage system is started up and the energy storage unit starts to provide electric energy, the first branch is disconnected, and the second branch is connected. After the energy storage unit starts to provide the electric energy, when a voltage between the two ends of the first branch is less than a third voltage threshold, the first branch is connected.

Optionally, when the power conversion device is started up and starts to receive the electric energy provided by the energy storage unit, the first branch is disconnected, and the second branch is connected. After the power conversion device receives the electric energy provided by the energy storage unit, when a voltage between the two ends of the first branch is less than a third voltage threshold, the first branch is connected.

The following uses an example in which the first branch is connected in series between the negative end of the energy storage unit and the negative bus for description.

Specifically, as shown in FIG. 17, a soft-start circuit 370 includes a first branch and a second branch. The first branch is connected in series between the negative end of the energy storage unit 320 and the negative bus of the DC/AC conversion circuit, and the second branch is connected in parallel to two ends of the first branch. The second branch is connected in series to a first resistor R.

In some embodiments, the controller 310 is configured to: when the energy storage system is started up and the energy storage unit starts to provide electric energy, control the first branch to be disconnected, and control the second branch to be connected. In response to that a voltage between two ends of the first branch is less than the third voltage threshold, the first branch is controlled to be connected.

It should be understood that, generally, when the energy storage system is started up, a voltage of the energy storage unit does not match a voltage of a power converter. The soft-start circuit 370 may implement soft-start between the energy storage unit and the power converter, to avoid a large voltage and current impact.

Specifically, as shown in FIG. 17, the first branch includes a switch Q3, the second branch includes a switch Q4 and a resistor R, and the switch Q4 and the resistor R are connected in series.

The controller 310 may obtain the voltage between the two ends of the first branch through a detection circuit. When the power conversion device is started up and starts to receive electric energy provided by the energy storage unit 320, or when the energy storage system is started up and the energy storage unit 320 starts to provide electric energy, the controller 310 controls the first branch to be disconnected and the second branch to be connected. For example, the controller 310 controls the switch Q3 to be turned off and the switch Q4 to be turned on. When determining that the voltage between the two ends of the first branch is less than the third voltage threshold, the controller 310 controls the first branch to be connected. In other words, the controller 310 controls the switch Q3 to be turned on. Optionally, the controller 310 controls the switch Q4 to be turned off.

It should be understood that, due to existence of the resistor R in the second branch, the voltage of the power converter does not suddenly increase, and therefore does not cause a sudden voltage change. If the voltage between the two ends of the first branch is less than the third voltage threshold, the controller 310 determines that soft-start is completed, controls the switch Q3 to be turned on to connect the first branch, turns off the switch Q4 to disconnect the second branch, so that the energy storage unit outputs electric energy through the first branch, and the entire energy storage system operates normally.

In this application, the third voltage threshold may be determined based on a requirement in an actual use process, for example, determined based on safe use voltages of the DC/DC conversion circuit and the energy storage unit. For example, the third voltage threshold may be set to 50 V It should be understood that a manner of determining the third voltage threshold and a specific value setting are not limited in this application.

In some embodiments, as shown in FIG. 17, the negative end of the energy storage unit 320 is connected to the DC/AC conversion circuit through the soft-start circuit 370.

Optionally, the positive end of the energy storage unit 320 is connected to the positive end or the negative end of the first end of the DC/DC conversion circuit through the soft-start circuit 370.

In this application, two different branches, namely, the soft-start circuit, are disposed on a circuit connected to the positive end or the negative end of the energy storage unit, so that after the power conversion device is started up, devices on two sides of the soft-start circuit do not generate an excessively large current impact. In this way, safety of the system can be improved through soft-start.

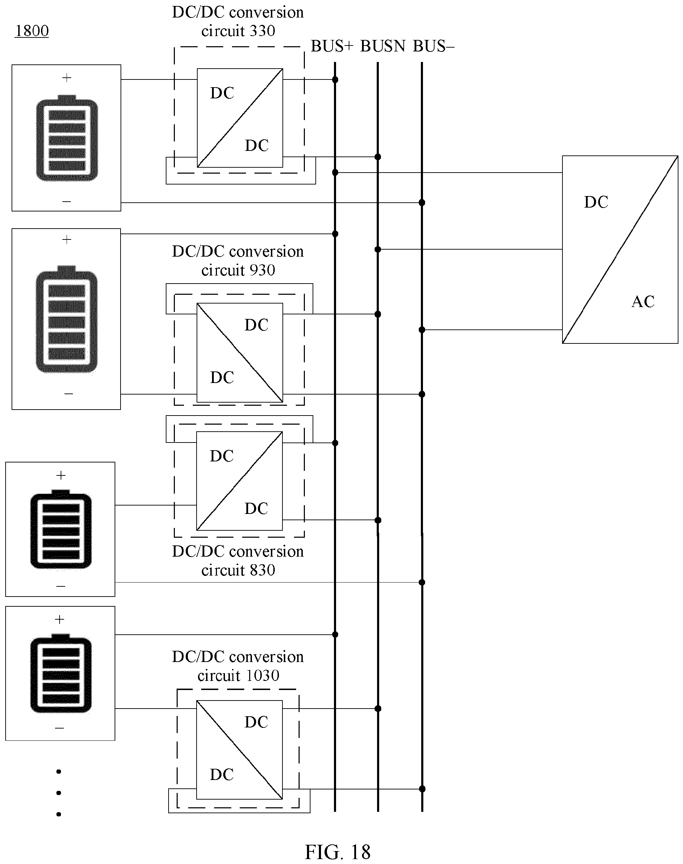

Based on the energy storage systems shown in FIG. 3 and FIG. 8 to FIG. 17, this application further provides an energy storage system. For details, refer to FIG. 18.

FIG. 18 is a diagram of another energy storage system according to an embodiment of this application.

As shown in FIG. 18, the energy storage system 1800 in this embodiment of this application includes a plurality of direct current DC/DC conversion circuits and a DC/AC conversion circuit. A first end of the DC/AC conversion circuit is a direct current bus, and includes a positive bus BUS+, a negative bus BUS-, and a neutral line BUSN, and a second end of the DC/AC conversion circuit is configured to connect to an alternating current power grid or a load. First ends of the plurality of DC/DC conversion circuits are configured to connect to a plurality of energy storage units in a one-to-one correspondence. The direct current bus of the DC/AC conversion circuit is a common bus.

It should be understood that the energy storage system in this embodiment of this application may include at least one first DC/DC conversion circuit and at least one second DC/DC conversion circuit in the energy storage systems in the embodiments in FIG. 3 and FIG. 8 to FIG. 17. Specifically, as shown in FIG. 18, the energy storage system 1800 includes a DC/DC conversion circuit 330 (an example of the first DC/DC conversion circuit), a DC/DC conversion circuit 830 (an example of the first DC/DC conversion circuit), a DC/DC conversion circuit 930 (an example of the second DC/DC conversion circuit), and a DC/DC conversion circuit 1030 (an example of the second DC/DC conversion circuit).

Specifically, the at least one first DC/DC conversion circuit and the at least one second DC/DC conversion circuit are configured to jointly control a voltage from the positive bus to the negative bus to meet a target input voltage of the DC/AC conversion circuit, and reduce a difference between a voltage from the positive bus to the neutral line and a voltage from the neutral line to the negative bus.

In this way, the first DC/DC conversion circuit connected to a positive half bus and the second DC/DC conversion circuit connected to a negative half bus are both disposed in the energy storage system, so that a voltage difference between the positive bus and the negative bus can be balanced to some extent, thereby reducing or even avoiding bus voltage equalization. In this way, efficiency of the energy storage system can be improved.

In some embodiments, the at least one first DC/DC conversion circuit and the at least one second DC/DC conversion circuit are disposed in a same power conversion device.

It should be understood that the energy storage system in this embodiment of this application may include a first DC/DC conversion circuit and a second DC/DC conversion circuit in any of the foregoing connection manners or any quantity of first DC/DC conversion circuits and second DC/DC conversion circuits. Herein, for a specific connection relationship between the first DC/DC conversion circuit and the second DC/DC conversion circuit in the energy storage system, refer to the embodiments described in FIG. 3 and FIG. 8 to FIG. 17. Details are not described again in this application.

In some embodiments, the energy storage system further includes a balanced circuit and a controller. A first end of the balanced circuit is connected to the positive bus, a second end of the balanced circuit is connected to the negative bus, and a third end of the balanced circuit is connected to the neutral line. The controller is configured to: in response to that the absolute value of the voltage difference between the positive bus and the negative bus is greater than or equal to the fourth voltage threshold, control the balanced circuit to operate, to maintain voltage balance between the positive bus and the negative bus. In response to that the absolute value of the voltage difference between the positive bus and the negative bus is less than the fourth voltage threshold, the balanced circuit is controlled not to operate.

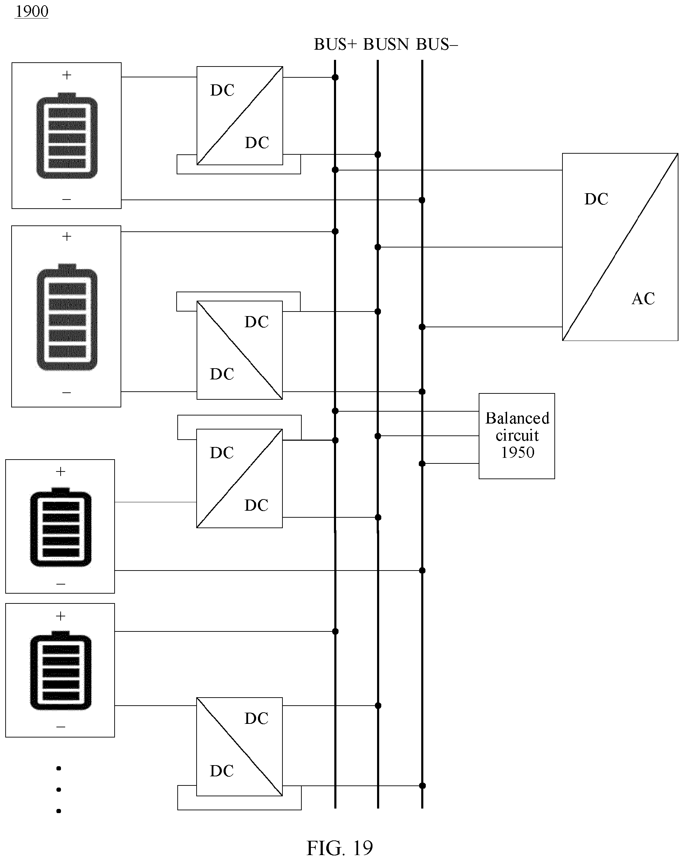

FIG. 19 is a diagram of another energy storage system according to an embodiment of this application. It should be understood that, in this embodiment of this application, only a difference between FIG. 19 and FIG. 18 is described.

As shown in FIG. 19, the energy storage system 1900 in this embodiment of this application further includes a controller (not shown in the figure) and a balanced circuit 1950.

A first end of the balanced circuit 1950 is connected to the positive bus BUS+, a second end of the balanced circuit 1950 is connected to the negative bus BUS-, and a third end of the balanced circuit 1950 is connected to the neutral line BUSN.

The controller is configured to: in response to that the absolute value of the voltage difference between the positive bus BUS+ and the negative bus BUS- is greater than or equal to the fourth voltage threshold, control the balanced circuit 1950 to operate, to maintain voltage balance between the positive bus and the negative bus. In response to that the absolute value of the voltage difference between the positive bus BUS+ and the negative bus BUS- is less than the fourth voltage threshold, the balanced circuit is controlled not to operate.

It should be understood that the energy storage system in this embodiment of this application may include a first DC/DC conversion circuit and a second DC/DC conversion circuit in any connection manner or any quantity of first DC/DC conversion circuits and second DC/DC conversion circuits. For details, refer to the embodiments described in FIG. 3 and FIG. 8 to FIG. 18. This is not limited in this application.

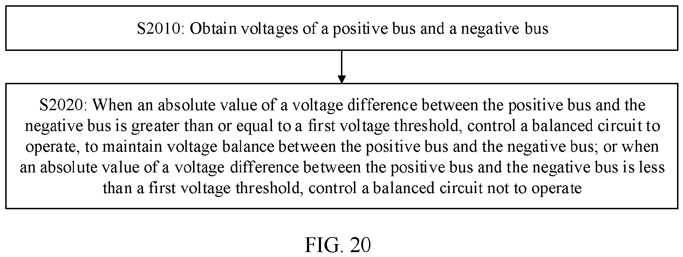

The following describes a control method for an energy storage system according to this application with reference to FIG. 20. It should be understood that the control method provided in this application may be applied to the energy storage systems or the power conversion apparatuses described in FIG. 3 and FIG. 8 to FIG. 19.

FIG. 20 is a schematic flowchart of a control method for an energy storage system according to an embodiment of this application.

As shown in FIG. 20, the method provided in this application may be performed by a controller. The energy storage system includes an energy storage unit, a direct current DC/DC conversion circuit, a DC/AC conversion circuit, and a balanced circuit. A first end of the DC/AC conversion circuit includes a positive bus, a negative bus, and a neutral line, and a second end of the DC/AC conversion circuit is configured to connect to an alternating current power grid and/or a load.

Optionally, the balanced circuit includes a plurality of switching transistors, and the balanced circuit is configured to reduce a difference between a voltage from the positive bus to the neutral line and a voltage from the neutral line to the negative bus.

The method provided in this application includes the following steps.

S2010: Obtain voltages of the positive bus and the negative bus.

S2020: When an absolute value of a voltage difference between the positive bus and the negative bus is greater than or equal to a fourth voltage threshold, control the balanced circuit to operate, to maintain voltage balance between the positive bus and the negative bus; or when an absolute value of a voltage difference between the positive bus and the negative bus is less than a fourth voltage threshold, control the balanced circuit not to operate.

Specifically, the controller determines, based on the voltages of the positive bus and the negative bus, whether the absolute value of the difference between the voltages is greater than the fourth voltage threshold; and if the absolute value of the voltage difference between the positive bus and the negative bus is greater than or equal to the fourth voltage threshold, control turn-on and turn-off of the plurality of switching transistors in the balanced circuit, to maintain voltage balance between the positive bus and the negative bus; or when the absolute value of the voltage difference between the positive bus and the negative bus is less than the fourth voltage threshold, control the balanced circuit not to operate.

In some embodiments, the energy storage system includes a first switch. The method provided in this application further includes the following steps.

S2030: Obtain a voltage between a positive end and a negative end of the energy storage unit.

S2040: When the voltage between the positive end and the negative end of the energy storage unit is greater than or equal to a first voltage threshold, control the first switch to be turned on, and control the DC/DC conversion circuit not to operate; or when the voltage between the positive end and the negative end of the energy storage unit is less than a first voltage threshold, control the first switch to be turned off, and control the DC/DC conversion circuit to operate, so that a voltage from the positive bus to the negative bus meets a target input voltage of the DC/AC conversion circuit, to compensate for a voltage difference between the voltage of the energy storage unit and a bus voltage, where the bus voltage is a voltage between the positive bus and the negative bus.

In some embodiments, the energy storage system includes a second switch. The method provided in this application further includes the following steps.

S2050: Obtain a voltage between a positive end and a negative end of the energy storage unit.

S2060: When the voltage between the positive end and the negative end of the energy storage unit is less than or equal to a second voltage threshold, control the second switch to be turned off.

In some embodiments, the energy storage system includes a soft-start circuit, and the soft-start circuit includes a first branch and a second branch. The method provided in this application further includes the following steps.

S2070: When the energy storage system is started up and the energy storage unit starts to provide electric energy, control the first branch to be disconnected, and control the second branch to be connected.

S2080: Obtain a voltage between two ends of the first branch.

S2090: When the voltage between the two ends of the first branch is less than a third voltage threshold, control the first branch to be connected.

For a specific implementation process of the foregoing method, refer to the energy storage systems or the power conversion apparatuses described in the embodiments in FIG. 3 and FIG. 8 to FIG. 19. Details are not described again in this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A power conversion device, comprising a direct current, DC/DC conversion circuit and a DC/alternating current, AC conversion circuit, wherein a first end of the DC/DC conversion circuit is configured to connect to an energy storage unit, a second end of the DC/DC conversion circuit is connected to a first end of the DC/AC conversion circuit, the first end of the DC/AC conversion circuit comprises a positive bus, a negative bus, and a neutral line, and a second end of the DC/AC conversion circuit is configured to connect to an alternating current power grid and/or a load;
an input voltage of the DC/DC conversion circuit is a voltage between the positive bus and a positive end of the energy storage unit, or a voltage between a positive end of the energy storage unit and the neutral line, or a voltage between the neutral line and a negative end of the energy storage unit, or a voltage between a negative end of the energy storage unit and the negative bus; and
an output voltage of the DC/DC conversion circuit is half of a direct current bus voltage.

2. The power conversion device according to claim 1, wherein
the DC/DC conversion circuit comprises a first DC/DC conversion circuit, wherein a negative end of a first end of the first DC/DC conversion circuit is configured to connect to the positive end of the energy storage unit, a positive end of the first end of the first DC/DC conversion circuit and a positive end of a second end of the first DC/DC conversion circuit are connected to the positive bus, and a negative end of the second end of the first DC/DC conversion circuit is connected to the neutral line; or
a positive end of a first end of the first DC/DC conversion circuit is configured to connect to the positive end of the energy storage unit, a positive end of a second end of the first DC/DC conversion circuit is connected to the positive bus of the DC/AC conversion circuit, and a negative end of the first end of the first DC/DC conversion circuit and a negative end of the second end of the first DC/DC conversion circuit are connected to the neutral line; or
the DC/DC conversion circuit comprises a second DC/DC conversion circuit, wherein a negative end of a first end of the second DC/DC conversion circuit is configured to connect to the negative end of the energy storage unit, a negative end of a second end of the second DC/DC conversion circuit is connected to the negative bus, and a positive end of the first end of the second DC/DC conversion circuit and a positive end of the second end of the second DC/DC conversion circuit are connected to the neutral line; or
a positive end of a first end of the second DC/DC conversion circuit is configured to connect to the negative end of the energy storage unit, a positive end of a second end of the second DC/DC conversion circuit is connected to the neutral line of the DC/AC conversion circuit, and a negative end of the first end of the second DC/DC conversion circuit and a negative end of the second end of the second DC/DC conversion circuit are connected to the negative bus.

3. The power conversion device according to claim 2, wherein the power conversion device comprises a plurality of DC/DC conversion circuits, and the plurality of DC/DC conversion circuits comprise:
at least one first DC/DC conversion circuit and at least one second DC/DC conversion circuit.

4. The power conversion device according to claim 3, wherein the at least one first DC/DC conversion circuit and the at least one second DC/DC conversion circuit are configured to jointly control a voltage from the positive bus to the negative bus to meet a target input voltage of the DC/AC conversion circuit, and reduce a difference between a voltage from the positive bus to the neutral line and a voltage from the neutral line to the negative bus.

5. The power conversion device according to any one of claims 2 to 4, wherein the power conversion device comprises a first switch, and the first switch is connected in parallel between the positive end of the first end of the first DC/DC conversion circuit and the positive end of the second end of the first DC/DC conversion circuit; or
the first switch is connected in parallel between the negative end of the first end of the first DC/DC conversion circuit and the positive end of the second end of the first DC/DC conversion circuit; or
the first switch is connected in parallel between the negative end of the first end of the second DC/DC conversion circuit and the negative end of the second end of the second DC/DC conversion circuit; or
the first switch is connected in parallel between the positive end of the first end of the second DC/DC conversion circuit and the negative end of the second end of the second DC/DC conversion circuit; and
when a voltage between the positive end and the negative end of the energy storage unit is greater than or equal to a first voltage threshold, the first switch is turned on, and the DC/DC conversion circuit does not operate; or
when a voltage between the positive end and the negative end of the energy storage unit is less than the first voltage threshold, the first switch is turned off, and the DC/DC conversion circuit operates, so that the voltage from the positive bus to the negative bus meets the target input voltage of the DC/AC conversion circuit.

6. The power conversion device according to any one of claims 2 to 5, wherein the power conversion device comprises a second switch, and the second switch is configured to be connected in series between the positive end of the energy storage unit and the first end of the first DC/DC conversion circuit; or
the second switch is configured to be connected in series between the negative end of the energy storage unit and the negative bus; or
the second switch is configured to be connected in series between the negative end of the energy storage unit and the first end of the second DC/DC conversion circuit; or
the second switch is configured to be connected in series between the positive end of the energy storage unit and the positive bus; and
when the voltage between the positive end and the negative end of the energy storage unit is less than or equal to a second voltage threshold, the second switch is turned off.

7. The power conversion device according to any one of claims 2 to 6, wherein the power conversion device comprises a soft-start circuit, the soft-start circuit comprises a first branch and a second branch, and the first branch is configured to be connected in series between the positive end of the energy storage unit and the first end of the first DC/DC conversion circuit, or the first branch is configured to be connected in series between the negative end of the energy storage unit and the negative bus, or the first branch is configured to be connected in series between the negative end of the energy storage unit and the first end of the second DC/DC conversion circuit, or the first branch is configured to be connected in series between the positive end of the energy storage unit and the positive bus;
the second branch is connected in parallel to two ends of the first branch, and the second branch is connected in series to a first resistor;
when the power conversion device is started up and starts to receive electric energy provided by the energy storage unit, the first branch is disconnected, and the second branch is connected; and
after the power conversion device receives the electric energy provided by the energy storage unit, when a voltage between the two ends of the first branch is less than a third voltage threshold, the first branch is connected.

8. The power conversion device according to any one of claims 2 to 7, wherein the power conversion device comprises a balanced circuit, the balanced circuit is configured to operate when an absolute value of a voltage difference between the positive bus and the negative bus is greater than or equal to a fourth voltage threshold, to reduce the difference between the voltage from the positive bus to the neutral line and the voltage from the neutral line to the negative bus, and the balanced circuit does not operate when the absolute value of the voltage difference between the positive bus and the negative bus is less than the fourth voltage threshold.

9. The power conversion device according to any one of claims 1 to 8, wherein the DC/AC conversion circuit is a two-level conversion circuit, a three-level conversion circuit, or a multi-level conversion circuit.

10. An energy storage system, comprising an energy storage unit, a DC/DC conversion circuit, and a DC/AC conversion circuit, wherein a first end of the DC/DC conversion circuit is connected to the energy storage unit, a second end of the DC/DC conversion circuit is connected to a first end of the DC/AC conversion circuit, the first end of the DC/AC conversion circuit comprises a positive bus, a negative bus, and a neutral line, and a second end of the DC/AC conversion circuit is configured to connect to an alternating current power grid and/or a load;
an input voltage of the DC/DC conversion circuit is a voltage between the positive bus and a positive end of the energy storage unit, or a voltage between a positive end of the energy storage unit and the neutral line, or a voltage between the neutral line and a negative end of the energy storage unit, or a voltage between a negative end of the energy storage unit and the negative bus; and
an output voltage of the DC/DC conversion circuit is half of a direct current bus voltage.

11. The energy storage system according to claim 10, wherein
the DC/DC conversion circuit comprises a first DC/DC conversion circuit, wherein a negative end of a first end of the first DC/DC conversion circuit is connected to the positive end of the energy storage unit, a positive end of the first end of the first DC/DC conversion circuit and a positive end of a second end of the first DC/DC conversion circuit are connected to the positive bus, and a negative end of the second end of the first DC/DC conversion circuit is connected to the neutral line; or
a positive end of a first end of the first DC/DC conversion circuit is connected to the positive end of the energy storage unit, a positive end of a second end of the first DC/DC conversion circuit is connected to the positive bus of the DC/AC conversion circuit, and a negative end of the first end of the first DC/DC conversion circuit and a negative end of the second end of the first DC/DC conversion circuit are connected to the neutral line; or
the DC/DC conversion circuit comprises a second DC/DC conversion circuit, wherein a negative end of a first end of the second DC/DC conversion circuit is connected to the negative end of the energy storage unit, a negative end of a second end of the second DC/DC conversion circuit is connected to the negative bus, and a positive end of the first end of the second DC/DC conversion circuit and a positive end of the second end of the second DC/DC conversion circuit are connected to the neutral line; or
a positive end of a first end of the second DC/DC conversion circuit is connected to the negative end of the energy storage unit, a positive end of a second end of the second DC/DC conversion circuit is connected to the neutral line of the DC/AC conversion circuit, and a negative end of the first end of the second DC/DC conversion circuit and a negative end of the second end of the second DC/DC conversion circuit are connected to the negative bus.

12. The energy storage system according to claim 11, wherein the energy storage system comprises a plurality of DC/DC conversion circuits, and the plurality of DC/DC conversion circuits comprise:
at least one first DC/DC conversion circuit and at least one second DC/DC conversion circuit.

13. The energy storage system according to claim 12, wherein the at least one first DC/DC conversion circuit and the at least one second DC/DC conversion circuit are configured to jointly control a voltage from the positive bus to the negative bus to meet a target input voltage of the DC/AC conversion circuit, and reduce a difference between a voltage from the positive bus to the neutral line and a voltage from the neutral line to the negative bus.

14. The energy storage system according to any one of claims 11 to 13, wherein the energy storage system comprises a first switch, and the first switch is connected in parallel between the positive end of the first end of the first DC/DC conversion circuit and the positive end of the second end of the first DC/DC conversion circuit; or
the first switch is connected in parallel between the negative end of the first end of the first DC/DC conversion circuit and the positive end of the second end of the first DC/DC conversion circuit; or
the first switch is connected in parallel between the negative end of the first end of the second DC/DC conversion circuit and the negative end of the second end of the second DC/DC conversion circuit; or
the first switch is connected in parallel between the positive end of the first end of the second DC/DC conversion circuit and the negative end of the second end of the second DC/DC conversion circuit; and
when a voltage between the positive end and the negative end of the energy storage unit is greater than or equal to a first voltage threshold, the first switch is turned on, and the DC/DC conversion circuit does not operate; or
when a voltage between the positive end and the negative end of the energy storage unit is less than the first voltage threshold, the first switch is turned off, and the DC/DC conversion circuit operates, so that the voltage from the positive bus to the negative bus meets the target input voltage of the DC/AC conversion circuit.

15. The energy storage system according to any one of claims 11 to 14, wherein the energy storage system comprises a second switch, and the second switch is connected in series between the positive end of the energy storage unit and the first end of the first DC/DC conversion circuit; or
the second switch is connected in series between the negative end of the energy storage unit and the negative bus; or
the second switch is connected in series between the negative end of the energy storage unit and the first end of the second DC/DC conversion circuit; or
the second switch is connected in series between the positive end of the energy storage unit and the positive bus; and
when the voltage between the positive end and the negative end of the energy storage unit is less than or equal to a second voltage threshold, the second switch is turned off.
